# EUROPÄISCHE PATENTSCHRIFT

(11) **EP 1 560 886 B1**
(45) Veröffentlichungstag und Bekanntmachung des Hinweises auf die Patenterteilung: **10.04.2013**
(21) Anmeldenummer: 03775208.6
(22) Anmeldetag: 21.10.2003
(51) Int. Cl.: C09D 11/00, C09B 11/12, G03G 9/09

(54) **BLAUES FARBMITTEL MIT BESONDERS HOHER REINHEIT UND POSITIVER TRIBOELEKTRISCHER STEUERWIRKUNG**
BLUE DYE WITH PARTICULARLY HIGH PURITY AND POSITIVE TRIBOELECTRIC CONTROL EFFECT
COLORANT BLEU PRESENTANT UNE PURETE PARTICULIEREMENT ELEVEE ET UN EFFET DE REGULATION TRIBOELECTRIQUE POSITIF

(30) Priorität: 05.11.2002 DE 10251394
(43) Veröffentlichungstag der Anmeldung: 10.08.2005
(73) Patentinhaber: Clariant Produkte (Deutschland) GmbH, 65929 Frankfurt am Main (DE)
(72) Erfinder: MICHEL, Eduard, 60529 Frankfurt am Main (DE); BAUR, Rüdiger, 65817 Eppstein (DE); MACHOLDT, Hans-Tobias, 64297 Darmstadt-Eberstadt (DE); KOHL, Norbert, 64839 Münster (DE)
(74) Vertreter: Hütter, Klaus
(86) Internationale Anmeldenummer: PCT/EP2003/011620
(87) Internationale Veröffentlichungsnummer: WO 2004/041944

(56) Entgegenhaltungen:
- EP-A- 0 615 007
- EP-A- 0 623 941
- EP-A- 0 639 611
- EP-A- 0 658 819
- EP-A- 0 705 886
- EP-A- 0 908 789
- EP-A- 1 061 419
- EP-A- 1 204 005
- WO-A-88/04442
- WO-A-89/09833
- US-A- 3 671 553

## Beschreibung

Die vorliegende Erfindung liegt auf dem Gebiet der Triphenylmethanfarbmiftel. Triphenylmethanfarbmittel sind von großer industrieller Bedeutung in der Produktion von blauen Druckfarben.

In der US 3,671,553 wird ein spezielles Verfahren zur Herstellung besonders reiner Triphenylmethanfarbstoffe beschrieben. Dennoch enthalten die so hergestellten Produkte bis zu 1 % Aniline (nach HPLC) als Rückstand aus der Synthese.

In der US 5,061,585 wird ein speziell substituiertes Triaminotriphenylmethan-farbmittel als positives Ladungssteuermittel für elektrophotographische Toner und Entwickler beschrieben. Diese Verbindung weist jedoch einen relativ hohen Gehalt an umweltkritischen Verunreinigungen, insbesondere an Anilin und Chlorbenzol, auf. Anilin und Chlorbenzol stellen hierbei Edukte für die Synthese der Zielsubstanz dar, die durch nicht vollständige Umsetzung oder Überschüsse als Verunreinigungen durch den gesamten Herstellungsprozess in das Endprodukt mitgeführt werden. So beträgt der Anilin-Gehalt, gemessen mittels Gaschromatographie im Head-Space-Gläschen (GC-HS) nach thermischer Exposition bei 120°C für 1 Stunde, zwischen ca. 1000 und 2500 ppm, während mittels Hochdruckflüssigkeitschromatographie (HPLC) von vollständig in Methanol gelösten Proben ca. 9000-10000 ppm Anilin gemessen werden. Bei der beschriebenen Verbindung wird auch ein deutlicher Chlorbenzol-Peak detektiert. Triphenylmethanfarbmittel mit einem Anilingehalt unter 2000 ppm (nach HPLC) sind bislang noch nicht bekannt.

Es bestand daher die Aufgabe, Triaminotriphenylmethan-Farbmittel mit einem Gehalt an primären aromatischen Aminen, insbesondere Anilin und m-Toluidin, unter 2000 ppm bereitzustellen.

Weiterhin war es die Aufgabe, das Farbmittel mit deutlich verringertem Gehalt an anorganischen Kationen und Anionen, wie beispielsweise Na⁺, K⁺, Al³⁺, SO₄²⁻oder Cl⁻ bereitzustellen. Dieser reduzierte Gehalt an anorganischen Ionen kann beispielsweise mittels Leitfähigkeit an einer wässrigen Suspension des Produkts gemessen werden.

Es wurde gefunden, dass diese Aufgabe durch ein neuartiges Reinigungs- und Isolierungsverfahren, wie nachstehend beschrieben, gelöst werden kann.

Gegenstand der Erfindung ist ein Verfahren zur Herstellung einer Verbindung der Formel (1) 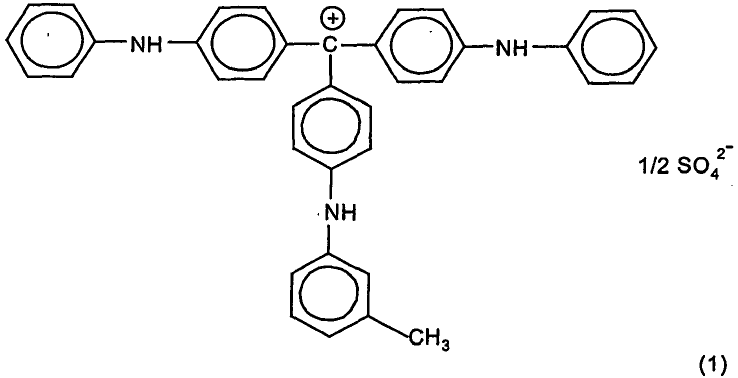 durch Friedel-Crafts-Alkylierung von p-Chlorbenzotrichlorid mit Chlorbenzol, Substitution des aromatisch gebundenen Chlors durch Anilin und m-Toluidin, alkalische Hydrolyse zur Farbstoffbase und Ausfällen als Farbbasensulfat der Formel (1), dadurch gekennzeichnet, dass das Farbbasensulfat
a) in Wasser aufgenommen und einer ersten Wasserdampfdestillation unterzogen, anschließend filtriert und gegebenfalls bei 50 bis 180°C getrocknet wird,
b) der Presskuchen mit Wasser versetzt bzw. das gegebenfalls getrocknete Farbbasensulfat mit Wasser angeteigt,
c) einer weiteren Wasserdampfdestillation und Filtration unterzogen
d) und einer Trocknung bei 50 bis 180°C unterworfen wird.

Herstellungsprodukt ist eine Verbindung der Formel (1), gekennzeichnet durch einen Gehalt an primären aromatischen Aminen, insbesondere Anilin und m-Toluidin, von weniger als 2000 ppm, vorzugsweise weniger als 1000 ppm, insbesondere weniger als 500 ppm, bestimmt durch HPLC. Hierzu wird die Verbindung der Formel (1) bei 120°C für etwa 1 Stunde getrocknet, in Methanol gelöst und durch HPLC analysiert (Elutionsmittel: Methanol/Wasser; Säule: RP-select B).

Die Verbindung ist auch dadurch gekennzeichnet, dass der besagte Amin-Gehalt, gemessen mittels GC-HS nach thermischer Belastung bei 120°C für 1 Stunde, unterhalb von 800 ppm liegt, bevorzugt unter 500 ppm, besonders bevorzugt unter 300 ppm.

Während bei der HPLC-Methode der gesamte Amin-Gehalt der Substanz erfasst wird (Amin + Amin-Sulfat), wird bei der GC-HS-Methode nur der flüchtige Anteil der Verbindungen im Gasraum über der Substanz detektiert.

Ferner liegt der Chlorbenzol-Gehalt nach Konditionierung bei 120°C für 1 Stunde und Messung mittels GC-HS unterhalb von 500 ppm, bevorzugt unter 150 ppm, besonders bevorzugt unter 70 ppm.

Zudem liegt die Leitfähigkeit einer 5 %igen wässrigen Dispersion des Produkts zwischen 0,001 und 1,5 mS/cm, vorzugsweise zwischen 0,01 und 1 mS/cm.

Vorzugsweise wird das erfindungsgemäße Verfahren folgendermaßen durchgeführt: Zunächst wird eine Friedel-Crafts-Reaktion von p-Chlorbenzotrichlorid mit Chlorbenzol unter katalytischer Einwirkung von Aluminiumtrichlorid durchgeführt. Anschließend findet die Substitution des aromatisch gebundenen Chlors des Friedel-Crafts-Produkts durch Anilin und m-Toluidin in chlorbenzolischer Lösung statt. Im nächsten Schritt wird das resultierende Zwischenprodukt mit wässriger Natronlauge zur freien "Farbstoffbase" hydrolysiert. Danach erfolgt die Fällung des gewünschten Produkts als "Farbbasensulfat" aus der chlorbenzolischen Lösung mit wässriger Schwefelsäure-Lösung in einer Fällkaskade mit nachgeschalteter Filtration. Anschließend erfolgt eine Aufnahme des gefällten Produkts in 70 bis 100°C, vorzugsweise 90 bis 100°C heißem Wasser und eine anschließende Wasserdampf-Destillation sowie eine nachgeschaltete wässrige Filtration zur Entfernung des wasserlöslichen Anilin-Sulfats. Danach kann das Produkt in einem Trockenprozess, beispielsweise in einem Etagentellertrockner, Umlufttrockner oder Schaufeltrockner, oder in einer Kombination davon, bei einer Temperatur von 50 bis 180°C, bevorzugt bei 80 bis 160°C, besonders bevorzugt bei 90 bis 150°C getrocknet werden, gegebenenfalls unter Vakuum bis zu 10⁻⁴ bar, beispielsweise bei 50 bis 100 mbar. Nach der Filtration wird der Produkt-Presskuchen mit Wasser in einem Verhältnis von 1:1 bis 1:1000, bevorzugt 1:2 bis 1:100, besonders bevorzugt 1:2 bis 1:50, versetzt, bzw. bei gegebenfalls durchgeführter Trocknung das so erhaltene getrocknete Produkt in den beschriebenen Verhältnissen angeteigt, und erneut einer Wasserdampf-Destillation und Filtration unterzogen. Danach kann erneut eine Trocknung, unter gleichen Bedingungen wie oben beschrieben, erfolgen. Der zusätzliche Versetzungs-Schritt des Presskuchens mit Wasser bzw. der Anteigschritt des getrockneten Materials mit Wasser, gefolgt von der Wasserdampf-Destillation und Filtration kann 1 bis 10 mal, vorzugsweise zweibis viermal, wiederholt werden, wobei nach der letztmaligen Wiederholung in jedem Falle eine Trocknung des Presskuchens, wie oben beschrieben, durchgeführt wird.

Um die Wirksamkeit der Entfernung der Verunreinigungen aus dem Produkt zu erhöhen, kann es sinnvoll sein, bereits vor der ersten Wasserdampfdestillation und/oder vor einer oder mehreren weiteren Wasserdampfdestillationen eine Nassmahlung der wässrigen Produktsuspension durchzuführen, beispielsweise mittels einer Zahnscheibenmühle, Stiftmühle oder Perlmühle, wobei man eine Teilchengrösse d₅₀ von 5 nm bis 1 mm, vorzugsweise von 1 µm bis 600 µm, für die gemahlenen Partikel in der Suspension erhält. Durch diesen Schritt wird die Zugänglichkeit des Wassers zu den Verunreinigungen in den eingeschlossenen Partikeln erhöht und somit die Entfernung mittels Wasserdampfdestillation und wässriger Filtration effizienter.

Anschliessend kann das getrocknete Farbbasensulfat durch Mahlung auf eine gewünschte Teilchengröße eingestellt werden. Vorteilhaft sind hier beispielsweise Luftstrahlmühlen, Schneidmühlen, Hammermühlen, Perlmühlen sowie Prallmühlen. Die angestrebte Teilchengröße, mittels lichtmikroskopischer Auswertung oder Laserlichtbeugung bestimmt, und definiert durch den d₅₀-Wert, liegt zweckmäßigerweise zwischen 0,01 *µ*m und 1000 *µ*m, bevorzugt zwischen 0,1 und 500 *µ*m und ganz besonders bevorzugt zwischen 0,5 und 400 *µ*m. Besonders vorteilhaft ist es, wenn durch die Mahlung eine enge Teilchengröße resultiert. Bevorzugt ist ein Bereich Δ (d₉₅-d₅₀) von kleiner als 500 *µ*m, insbesondere kleiner als 400 *µ*m.

Die Verbindung enthält überwiegend kristalline, aber auch amorphe Anteile.

Das Produkt lässt sich zum Pigmentieren von hochmolekularen organischen Materialien natürlicher oder synthetischer Herkunft einsetzen, beispielsweise von Kunststoffen, Harzen, Lacken, Anstrichfarben, oder elektrophotographischen Tonern und Entwicklern, sowie von Tinten und Druckfarben. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoffund Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Darüberhinaus ist das Produkt auch geeignet als Farbmittel in Gummimaterialien, Büroartikeln, Holzanstrich- und Reinigungsmitteln sowie Künstlermalfarben. Typische Druckfarben sind z.B. Offsetdruckfarben, Illustrationstiefdruckfarben sowie Druckfarben für den wässrigen und lösemittelhaltigen Verpackungsdruck und den Flexodruck. Die Verbindung kann als Farbmittel für Druckfarben beispielsweise durch Überführung in eine sulfonierte Stufe und Nachbehandlung des Produkts zu einem Pulver oder einer Paste eingesetzt werden. Typische Handelsnamen sind hierbei beispielsweise Reflex Blau R54, Reflex Blau A5H-R, Reflex Blau A5H-R31, Reflex Blau A6H-R, Reflex Blau A6H-R31 oder Reflex Blau A6L-R31. Typische Lacke sind Autoserien- und Reparaturlacke, Industrielacke sowie Bautenanstrichfarben (z.B. Kunststoffputze oder Dispersionsanstrichfarben). Typische Kunststoffeinfärbungen sind z.B. solche in Hart- und Weich-PVC (Polyvinylchlorid), Polyolefinen oder Polystyrolen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, das Produkt als Blend oder in Form von Präparationen oder Dispersionen zu benutzen. Bezogen auf das einzufärbende, hochmolekulare organische Material setzt man das Produkt in einer Menge von 0,05 bis 70 Gew.-%, vorzugsweise 0,1 bis 15 Gew.-%, ein.

Das Produkt ist auch geeignet als Farbmittel und Ladungssteuermittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren ist das Produkt geeignet als Farbmittel und Ladungssteuermittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen. Als Ladungs-steuermittel bewirkt das Produkt hierbei eine Erhöhung des elektrostatischen Eigenverhaltens des Pulvers oder Pulverlackes. Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Das eingesetzte blaue Farbmittel kann auch mit weiteren positiv oder negativ steuernden Ladungssteuermitteln kombiniert werden, um gute anwendungstechnische Aufladbarkeiten zu erzielen, wobei die GesamtKonzentration der Ladungssteuermittel zweckmäßig zwischen 0,01 und 70 Gew.-%, bevorzugt zwischen 0,05 und 20 Gew.-%, besonders bevorzugt zwischen 0,1 und 5 Gew.-%, liegt, bezogen auf das Gesamtgewicht des elektrophotographischen Toners, Entwicklers, Pulvers oder Pulverlacks.

Als weitere Ladungssteuermittel kommen beispielsweise in Betracht:
andere Triphenylmethane; Ammonium- und Immoniumverbindungen, Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate, Phenolderivate; Phosphoniumverbindungen und fluorierte Phosphoniumverbindungen; Calix(n)arene, ringförmig verknüpfte Oligosaccharide (Cyclodextrine) und deren Derivate, insbesondere Borester-Derivate, Interpolyelektrolytkomplexe (IPECs); Polyestersalze; Metallkomplexverbindungen, insbesondere Salicylat-Metall-Komplexe und Salicylat-Nichtmetalkomplexe, Salze ionischer Struktursilikate, Hydroxycarbonsäure-Metall-Komplexe und Hydroxycarbonsäure-Nichtmetallkomplexe, Benzimidazolone; Azine, Thiazine oder Oxazine, die im Colour Index als Pigments, Solvent Dyes, Basic Dyes oder Acid Dyes aufgeführt sind.

Besonders bevorzugt sind die nachfolgend genannten Ladungssteuermittel, die einzeln oder in Kombination miteinander mit dem verwendeten blauen Farbmittel kombiniert werden können:
Triphenylmethane, wie z.B. beschrieben in US-A-5 061 585;
Ammonium- und Immoniumverbindungen, wie z.B. beschrieben in US-A-5 015 676;
Fluorierte Ammonium- und fluorierte Immoniumverbindungen, wie z.B. beschrieben in US-A-5 069 994; biskationische Säureamide, wie z.B. beschrieben in WO 91/10172; Diallylammoniumverbindungen, wie z.B. beschrieben in DE-A-4 142 541, DE-A-4 029 652 oder DE-A-4 103 610;
Arylsulfid-Derivate, wie z.B. beschrieben in DE-A-4 031 705;
Phenolderivate, wie z.B. beschrieben in EP-A-0 258 651;
Phosphoniumverbindungen und fluorierte Phosphoniumverbindungen, wie z.B. beschrieben in US-A-5 021 473 und US-A-5 147 748;
Calix(n)arene, wie z.B. beschrieben in EP-A-0 385 580;
Benzimidazolone, wie z.B. beschrieben in EP-A-0 347 695;
Ringförmig verknüpfte Oligosaccharide, wie z.B. beschrieben in DE-A-4 418 842; Polyestersalze, wie z.B. beschrieben in DE-A-4 332 170;
Cyclooligosaccharid-Verbindungen, wie z.B. beschrieben in DE-A-197 11 260; Inter-Polyelektrolyt-Komplexe, wie z.B. beschrieben in DE-A-197 32 995,
Salze ionischer Struktursilikate, wie z.B. beschrieben in PCT/EP 00/11217. Weiterhin geeignet, insbesondere für Flüssigtoner, sind oberflächenaktive, ionische Verbindungen und sogenannte Metallseifen. Besonders geeignet sind alkylierte Arylsulfonate, wie Bariumpetronate, Calciumpetronate, Bariumdinonylnaphthalensulfonate (basisch und neutral), Caiciumdinonylsulfonat oder Dodecylbenzolsulfonsäure-Na-salz und Polyisobutylensuccinimide (Chevrons Oloa 1200).

Weiterhin geeignet sind Soyalecithin und N-Vinylpyrrolidon-Polymere.

Weiterhin geeignet sind Natriumsalze von phosphatierten Mono- und Diglyceriden mit gesättigten und ungesättigten Substituenten, AB- Diblockcopolymere von A: Polymere von 2-(N;N)di-methylaminoethyl-methacrylat quarternisiert mit Methyl-p-toluolsulfonat, und B: Poly-2-ethylhexylmethacrylat.

Weiterhin geeignet, insbesondere in Flüssigtonern, sind di- und trivalente Carboxylate, insbesondere Aluminium-tristearat, Bariumstearat, Chromstearat, Magnesiumoktat, Calciumstearat, Eisennaphthalit und Zinknaphthalit.

Weiterhin sind geeignet chelatisierende Ladungssteuermittel (EP 0 636 945 A1), metallische (ionische) Verbindungen (EP 0 778 501 A1), Phosphat-Metallsalze, wie in JA 9 (1997)-106107 beschrieben. Weiterhin geeignet sind Azine der folgenden Color-Index-Nummem: C.I. Solvent Black 5, 5:1, 5:2, 7, 31 und 50; C.I. Pigment Black 1, C.I. Basic Red 2 und C.I. Basic Black 1 und 2.

Das verwendete blaue Farbmittel wird einzeln oder in Kombination miteinander oder mit weiteren, vorstehend genannten Ladungssteuermitteln, in einer Konzentration von 0,01 bis 50 Gew.-%, vorzugsweise von 0,05 bis 20 Gew.-%, besonders bevorzugt von 0,1 bis 5,0 Gew.-%, bezogen auf die Gesamtmischung, in das Bindemittel des jeweiligen Toners, Entwicklers, Lacks, Pulverlacks, Elektretmaterials oder des elektrostatisch zu trennenden Polymers homogen, beispielsweise durch Extrudieren oder Einkneten, Perlmahlen oder mit Ultraturrax (Schnellrührer) eingearbeitet. Dabei können die eingesetzten Verbindungen als getrocknete und gemahlene Pulver, Dispersionen oder Lösungen, Presskuchen, Masterbatches, Präparationen, angeteigte Pasten, als auf geeignete Träger, wie z.B. Kieselgel bzw. mit solchen Trägern vermischt, TiO₂, Al₂O₃, Ruß, aus wässriger oder nichtwässriger Lösung aufgezogene Verbindungen oder in sonstiger Form zugegeben werden. Ebenso können die verwendeten Verbindungen grundsätzlich auch schon bei der Herstellung der jeweiligen Tonerpolymer-Matrix zugegeben werden, d.h. im Verlauf von deren Polymerisation, Polyaddition oder Polykondensation, sowie bei der Herstellung von Polymerisationstonern, beispielsweise während der Suspensions-, Emulsionspolymerisation oder bei der Aggregation der Polymersysteme zu Tonerteilchen.

Das blaue Farbmittel sowie die Ladungssteuermittel können auch in Form feinverteilter wässriger, wässrig-organischer oder organischer Dispersionen eingesetzt werden. Die Teilchengrößen (d₅₀-Werte) liegen zwischen 1 nm und 1 µm, bevorzugt zwischen 50 und 500 nm. Zweckmäßig sind Konzentrationen an Ladungssteuermittel zwischen 0,01 und 50 Gew.-%, vorzugsweise zwischen 0,1 und 30 Gew.-%, bezogen auf das Gesamtgewicht der Dispersion. Die Viskosität einer solchen Dispersion liegt zweckmäßigerweise zwischen 0,5 und 10⁶ mPa s, vorzugsweise zwischen 1 und 5000 mPa s.

Im Falle wässriger oder wässrig-organischer Dispersionen wird Wasser vorzugsweise in Form von destilliertem oder entsalztem Wasser eingesetzt.

Im Fall organischer oder wässrig-organischer Dispersionen werden als organisches Medium ein oder mehrere organische Lösemittel eingesetzt, vorzugsweise aus der Gruppe der ein- oder mehrwertigen Alkohole, deren Ether und Ester, z. B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 6 C-Atomen, z. B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmonomethyl- oder ethyl- oder butylether, Triethylenglykolmonomethyl- oder ethylether; Ketone und Ketonalkohole, wie z.B. Aceton, Methylethylketon, Di-ethylketon, Methylisobutylketon, Methylpentylketon, Cyclopentanon, Cyclohexanon, Diacetonalkohol; Amide, wie z.B. Dimethylformamid, Dimethylacetamid und N-Methylpyrrolidon.

Zur Herstellung stabiler Dispersionen können zusätzlich noch übliche ionische oder nichtionische Dispergierhilfsmittel, wie z.B. Sulfonate, Phosphate, Polyphosphate, Carbonate, Silicate, Hydroxide, Metallseifen, Polymere, wie Acrylate, Fettsäurederivate und Glycosidverbindungen, eingesetzt werden. Weiterhin können die Dispersionen Metallkomplexbildner, wie z.B. EDTA oder NTA, enthalten.

Weiterhin können die Dispersionen noch weitere übliche Zusatzstoffe enthalten, wie beispielsweise Konservierungsmittel, Biocide, Antioxidantien, kationische, anionische, amphotere oder nichtionogene oberflächenaktive Substanzen (Tenside und Netzmittel), Entgaser/Entschäumer sowie Mittel zur Regulierung der, Viskosität, z.B. Polyvinylalkohol, Cellulosederivate oder wasserlösliche natürliche oder künstliche Harze und Polymere als Filmbildner bzw. Bindemittel zur Erhöhung der Haft- und Abriebfestigkeit. Als pH-Regulatoren kommen organische oder anorganische Basen und Säuren zum Einsatz. Bevorzugte organische Basen sind Amine, wie z.B. Ethanolamin, Diethanolamin, Triethanolamin, N,N-Dimethylethanolamin, Diisopropylamin, Aminomethylpropanol oder Dimethylminomethylpropanol. Bevorzugte anorganische Basen sind Natrium-, Kalium-, Lithiumhydroxid oder Ammoniak. Weitere Bestandteile können hydrotrope Verbindungen sein, wie z.B. Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, Zucker, N-Methylpyrrolidon, 1,3-Diethyl-2-imidazolidinon, Thiodiglykol, Natrium-Benzolsulfonat, Na-Xylolsulfonat, Na-Toluolsulfonat, Na-Cumolsulfonat, Na-Benzoat, Na-Salicylat oder Na-Butylmonoglykolsulfat.

Die Konzentration dieser Dispergierhilfsmittel und/oder üblicher Zusatzstoffe in der Dispersion liegt zweckmäßigerweise zwischen 0,001 und 80 Gew.-%, vorzugsweise zwischen 0,01 und 50 Gew.-%, bezogen auf das Gesamtgewicht der Dispersion.

Um elektrophotographische Bunttoner herzustellen, können weitere Farbmittel wie organische Buntpigmente, anorganische Pigmente oder Farbstoffe, üblicherweise in Form von Pulvern, Dispersionen, Presskuchen, Lösungen oder Masterbatches zugesetzt werden.

Die organischen Buntpigmente können aus der Gruppe der Azopigmente oder polycyclischen Pigmente oder Mischkristalle (solid solutions) solcher Pigmente sein.

Bevorzugte Blau- und/oder Grünpigmente sind Kupferphthalocyanine, wie C.I. Pigment Blue 15, 15:1, 15:2, 15:3, 15:4, 15:6, P. Blue 16 (metallfreies Phthalocyanin), oder Phthalocyanine mit Aluminium, Nickel, Eisen oder Vanadium als Zentralatom, weiterhin Triarylcarboniumpigmente, wie Pigment Blue 1, 2, 9, 10, 14, 16, 56, 60, 61, 62, 68, 80. Pigment Green 1, 4, 7, 17, 36, 50 45; Orange-Pigmente, wie z.B. P.O. 5, 13, 34, 36, 38, 43, 62, 68,70, 72, 71, 74; Gelbpigmente, wie z.B. P.Y. 12, 13, 14,17, 74, 83, 93, 97, 111, 120,122, 139,151, 154, 155, 174, 175, 176,180, 174, 185, 194, 213, 214. Rot-Pigmente, wie z.B. P.R. 2,3, 4,5,9, 38, 48, 53, 57, 112, 122, 144, 146, 147,149, 168, 170, 175,176, 177,179,181, 184, 185, 186, 188, 189, 202, 207, 208, 209, 210, 214, 219, 238, 253, 254, 255, 256,257, 266, 269, 270, 272, 279. Violett-Pigmente wie P.V. 1, 19, 23,32, Ruße wie P. Black 7, 11, 33 oder in ihrer oberflächenmodifizierten Form wie in US 5,554,739 beschrieben, Eisen/Mangan-Oxide; weiterhin Mischkristalle wie beispielsweise aus oben beschriebenen Pigmenten wie C.I. Pigment Violett 19 und C.I. Pigment Red 122,
sowie azo-oberflächenmodifizierte Pigmente wie in WO 01/30919 beschrieben. Die Mischungen können in Form der Pulver, Granulate, durch Mischen von Presskuchen, sprühgetrockneten Presskuchen, Masterbatches sowie durch Dispergieren (Extrusion, Kneten, Walzenstuhlverfahren, Perlmühlen, Ultraturrax, Ultraschall) in Gegenwart eines Trägermaterials in fester oder flüssiger Form (Tinten auf wässriger und nicht-wässriger Basis) sowie durch Flushen in Gegenwart eines Trägermaterials hergestellt werden. Wird das Farbmittel mit hohen Wasser- oder Lösemittelanteilen eingesetzt (> 5 %), so kann das Mischen auch in Gegenwart erhöhter Temperaturen, durch nachträgliches Abkühlen der Mischungs-Masse und durch Vakuum unterstützt ablaufen. Der Flushvorgang kann in Gegenwart oder Abwesenheit von organischen Lösemitteln und von Wachsen ablaufen.

Insbesondere zur Steigerung der Brillanz, aber auch zur Nuancierung des Farbtones bieten sich Mischungen mit organischen Farbstoffen an. Als solche sind bevorzugt zu nennen:
wasserlösliche Farbstoffe, wie z.B. Direct, Reactive und Acid Dyes, sowie lösemittellösliche Farbstoffe, wie z.B. Solvent Dyes, Disperse Dyes und Vat Dyes. Als Beispiele seien genannt: C.I. Reactive Yellow 37, Acid Yellow 23, Reactive Red 23, 180, Acid Red 52, Reactive Blue 19, 21, Acid Blue 9, Direct Blue 199, Solvent Yellow 14, 16, 25, 56, 62, 64, 79, 81, 82, 83, 83:1, 93, 98, 133, 162, 174, Solvent Red 8, 19, 24, 49, 89, 90, 91, 92, 109, 118, 119, 122, 124, 127, 135, 160, 195, 212, 215, Solvent Blue 44, 45, Solvent Orange 41, 60, 63, Disperse Yellow 64, Vat Red 41, Solvent Black 45, 27.

Auch können Farbstoffe und Pigmente mit fluoreszierenden Eigenschaften, wie ^{®}Luminole (Riedel-de Haen) eingesetzt werden, beispielsweise um fälschungssichere Toner herzustellen.

Weiterhin können die Farbmittel auch in einer speziellen wachsgecoateten Form, wie in der EP-A-1 204 005 beschrieben, in Kombination mit den Ladungssteuermitteln verwendet werden.

Anorganische Pigmente, wie beispielsweise TiO₂ oder BaSO₄, dienen in Mischungen zur Aufhellung. Weiterhin sind Mischungen mit Effekt-Pigmenten, wie beispielsweise Perlglanz-Pigmenten, Fe₂O₃-Pigmenten (^{®}Paliochrome) sowie Pigmenten auf Basis cholesterischer Polymere, die in Abhängigkeit vom Beobachtungswinkel unterschiedliche Farbeindrücke ergeben, geeignet.

Elektrophotographische Toner und auch Pulverlacke können weiterhin noch Wachse enthalten. Der Begriff "Wachs" bezeichnet eine Reihe natürlicher oder künstlich gewonnener Stoffe, die in der Regel folgende Eigenschaften aufweisen: Bei 20°C knetbar, fest bis brüchig hart, grob bis feinkristallin, durchscheinend bis opak, jedoch nicht glasartig; über 40°C ohne Zersetzung schmelzend, schon wenig oberhalb des Schmelzpunktes verhältnismäßig niedrigviskos und nicht fadenziehend, stark temperaturabhängige Konsistenz und Löslichkeit, unter leichtem Druck polierbar.

Als Wachse werden bevorzugt: Naturwachse, wie Pflanzenwachse, z.B. Carnaubawachs, Candellilawachs, und tierische Wachse, z.B. Bienenwachs, modifizierte Naturwachse, wie z.B. Paraffinwachse, Mikrowachse, teilsynthetische Wachse, wie z.B. Montanesterwachse, oder vollsynthetische Wachse, wie Polyolefinwachse, z.B. Polyethylen und Polypropylenwachse, Polyethylenglykolwachse, Cycloolefincopolymerwachse, Amidwachse, wie z.B. N,N'-Distearylethylendiamin, Zirconocenwachse sowie chlor- oder fluorhaltige Polyolefinwachse oder Polyethylen-Polytetrafluorethylen-Wachsmischungen.

Von Interesse ist auch ein elektrophotographischer Toner, Pulver oder Pulverlack, enthaltend 30 bis 99,99 Gew.-%, vorzugsweise 40 bis 99,5 Gew.-%, eines üblichen Bindemittels, beispielsweise ein Styrol-, Styrolacrylat, Styrolbutadien-, Acrylat-, Urethan-, Acryl-, Polyester- oder Epoxidharz oder eine Kombination der letzten beiden, 0,01 bis 50 Gew.-%, vorzugsweise 0,05 bis 20 Gew.-%, besonders bevorzugt 0,1 bis 5 Gew.-%, des Produktes, und gegebenenfalls 0,001 bis 50 Gew.-%, vorzugsweise 0,05 bis 20 Gew.-%, eines weiteren Farbmittels und/oder Ladungssteuermittels, jeweils bezogen auf das Gesamtgewicht des elektrophotographischen Toners, Pulvers oder Pulverlacks.

Ferner kann die beschriebene Verbindung auf "Free-Flow Agents" als zusätzliches Ladungssteuerelement in suspendierter Form oder in trockener Abmischung aufgebracht werden. Die beschriebene Verbindung kann auch für ein "Carrier-Coating" eingesetzt werden.

Außerdem' ist das Produkt als Farbmittel in Ink-Jet Tinten auf wässriger und nichtwässriger Basis sowie in solchen Tinten, die nach dem Hot-melt-Verfahren arbeiten, geeignet. Hierbei kann es auch in Kombination mit anderen Tinten zur Herstellung von beispielsweise magentafarbenen, cyanfarbenen, gelben oder schwarzen Tinten verwendet werden.

Ink-Jet-Tinten enthalten im allgemeinen insgesamt 0,5 bis 15 Gew.-%, vorzugsweise 1,5 bis 8 Gew.-%, (trocken gerechnet) des Produkts.

Mikroemulsionstinten basieren auf organischen Lösemitteln, Wasser und ggf. einer zusätzlichen hydrotropen Substanz (Grenzflächenvermittler). Mikroemulsionstinten enthalten im allgemeinen 0,5 bis 15 Gew.-%, vorzugsweise 1,5 bis 8 Gew.-%, des Produkts, 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 15 Gew.-% des Produkts, 85 bis 99,5 Gew.-% organisches Lösungsmittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im wesentlichen aus 20 bis 90 Gew.-% Wachs und 1 bis 10 Gew.-% des Produkts. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein. Typische Zusatzstoffe und Hilfsmittel sind z.B. in US-PS 5,560,760 beschrieben.

Ferner ist die Verbindung auch geeignet als Mittel zur Schönung von Schwarz-, Rot-, Gelb- oder Braun-Tönen, beispielsweise in Tonern, Entwicklern, Druckfarben, Lacken, Kunststoffen, Gummimaterialien, Anstrichfarben, Büroartikeln, Künstlerfarben oder Ink-Jet-Tinten.

Weiterhin ist das Produkt auch geeignet als Farbmittel für Farbfilter sowohl für die additive wie subtraktive Farberzeugung sowie als Farbund Ladungssteuermittel für elektronische Tinten ("electronic inks") oder "electronic paper" ("e-paper"), die aus der Literatur bekannt sind, wie beispielsweise aus Shuichi Maeda, Kohei Gocho and Makoto Omodani, "Electrical Twisting Sticks in a Transparent Tube", Proceedings of the International Congress of Imaging Science 2002, Tokyo, S. 507-508.

Weiterhin ist die beschriebene Verbindung auch geeignet zur Oberflächenmodifizierung von Pigmentpartikeln wie beispielsweise beschrieben in WO 01/30919 A1, US 5'922'118 oder US 5'554'739.

Darüber hinaus kann die beschriebene Verbindung als Ladungssteuermittel das Aufladungs- sowie das Ladungsstabilitätsverhalten von Elektretmaterialien, insbesondere Elektretfasern, erheblich verbessern. Typische Elektretmaterialien basieren auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus. Elektretmaterialien, insbesondere Elektretfasern, können beispielsweise zur (Feinst-)Staubfiltration eingesetzt werden. Die Elektretmaterialien können ihre Ladung durch Corona- oder Triboaufladung erhalten.

Weiterhin kann die beschriebene Verbindung als Ladungssteuermittel in elektrostatischen Trennvorgängen, insbesondere in Trennvorgängen von Polymeren verwendet werden. Ohne Ladungssteuermittel laden sich "Low Density Polyethylen (LDPE)" und "High Density Polyethylen" (HDPE) reibungselektrisch weitestgehend ähnlich auf. Nach Ladungssteuermittelzugabe laden sich LDPE stark positiv und HDPE stark negativ auf und lassen sich so gut trennen. Neben der äußerlichen Aufbringung der Ladungssteuermittel ist auch eine Einarbeitung derselben in das Polymer möglich, um beispielsweise ein Polymer innerhalb der triboelektrischen Spannungsreihe zu verschieben und eine entsprechende Trennwirkung zu erhalten. Ebenso lassen sich auf diese Weise andere Polymere wie z.B. Polypropylen (PP) und/oder Polyethylenterephthalat (PET) und/oder Polyvinylchlorid (PVC) voneinander trennen.

Die beschriebene Verbindung kann ferner auch zur Trennung von Salzmineralien verwendet werden, indem sie durch Zugabe (Oberflächenkonditionierung) die substratspezifische elektrostatische Aufladung verbessert.

Weiterhin kann die beschriebene Verbindung aufgrund der Ladungssteuereigenschaften auch als "Electroconductivity Providing Agents" (ECPA) in Tinten für Tintenstrahldrucker eingesetzt werden.

Die genannten Analysemethoden werden wie folgt durchgeführt:
1) HPLC:
   - Säule: RP-select B;
   - Elutionsmittel: Methanol/Wasser
      beginnend mit 30 % Methanol/70 % Wasser, dann innerhalb von 20 Minuten
      auf 50 % Methanol,
      dann innerhalb von 10 Minuten auf 100 % Methanol, dann 10 Minuten konstant auf 100 % Methanol bleiben;
   - Temperatur: 40°C;
   - Durchfluss: 0,2 ml/Minute;
2) Head space + GC/MS:
   a) Head space: 120°C, 60 Minuten
   b) GC/MS
      - Säule: HP-624 (VOC), (0,25 mm, 60 m);
      - Trägergas: Helium;
      - Ofen: 40°C (2 Minuten), 250°C (20 K/Minute), 250°C (30 Minuten);
      - Split ratio: 30:1

In den nachfolgenden Beispielen bedeuten Teile Gewichtsteile und Prozent Gewichtsprozent.

Herstellungsbeispiel:
2,6 l Chlorbenzol und 600 g Aluminiumchlorid wurden in einem Kolben unter Rühren bei 25°C zusammengegeben, anschließend portionsweise 986 g p-Chlorbenzoltrichlorid bei max. 35°C zugefügt, die Mischung auf 60°C erwärmt,
6 Stunden nachgerührt und danach auf Raumtemperatur abgekühlt. Anschließend wurden bei 30 bis 40°C 520 ml m-Toluidin zur Mischung zugefügt, die Mischung langsam auf 130°C erhitzt und dann bei dieser Temperatur 2 Stunden nachgerührt. Dann wurden 2,1 l Anilin innerhalb von 3 Stunden zugegeben und die Reaktionstemperatur auf 160 bis 165°C erhöht. Hierbei wird das Chlorbenzol abdestilliert. Um das restliche Chlorbenzol zu entfernen, wurde bei 160 bis 165°C ein leichtes bis mittleres Vakuum angelegt. Schließlich wurde wieder abgekühlt und das Vakuum abgestellt.

Dann wurden in einem zweiten Kolben 3,3 l 33 %ige Natronlauge vorgelegt, die Reaktionsmischung aus dem ersten Kolben unter Rühren bei ca. 95°C zugegeben und 3 Stunden bei 95°C nachgerührt. Nach Zugabe von 2 l Wasser zur Reaktionsmischung und Rührer wurde die untere Aluminat-Phase abgetrennt. Danach wurden 9,2 l Chlorbenzol sowie 4 l Wasser zur Mischung zugegeben, unter Rühren auf 50°C erwärmt und erneut 1 Stunde absetzen lassen. Die untere chlorbenzolische Phase, die die "Blaubase" enthält, wurde abgetrennt und in 40 %iger Schwefelsäure-Lösung in einer Fällungs-Kaskade bei ca. 50 bis 70°C gefällt und anschließend das erhaltene "Farbbasensulfat" abfiltriert.

Das gefällte und filtrierte Farbbasensulfat wurde mit 90 bis 100°C heißem Wasser gewaschen und einer Wasserdampfdestillation bei 100°C, anschließender Filtration und Trocknung bei ca. 110°C auf einem Etagentellertrockner, Anteigen des getrockneten Produkts mit der zehnfachen Gewichtsmenge an Wasser und einer zweiten Wasserdampfdestillation mit anschließender Filtration und Trocknung bei 110°C unterzogen.

Charakterisierung:
- Aussehen: dunkelblaues Pulver
- Anilin-Gehalt: 180 ppm (GC-HS nach 1 h/120°C)
- Anilin-Gehalt: 290 ppm (HPLC in Methanol/Wasser, nach 1 h/120°C)
- m-Toluidin-Gehalt: < 50 ppm (HPLC in Methanol/Wasser, nach 1 h/120°C)
- Chlorbenzol-Gehalt: 30 ppm (GC-HS nach 1 h/120°C)
- tan δ (1 kHz): 0,03
- spezifischer Widerstand: 5x10¹³ Ωcm
- Kristallinität: Peaks im Röntgenbeugungsdiagram bei folgenden Winkeln 2θ (CuKα-Strahlung): 6,93°(mittel); 12,03°(mittel); 13,90°(mittel); 18,44°(stark); 21,13°(schwach); 21,64°(schwach); 22,45°(schwach); 24,57°(schwach); 28,14°(schwach); 30,53°(schwach); 32,42°(schwach); das blaue Farbmittel zeigt gegenüber dem bislang bekannten Triphenylmethan-Farbstoff mit deutlich höherem Gehalt an Verunreinigungen, wie beispielsweise Anilin oder Chlorbenzol, keinen (schwachen) Peak bei 2θ = 6° auf;
- IR-Spektrum: charakteristische Banden bei folgenden Wellenzahlen ν [1/cm]: 3600-3300 (mehrere Banden, schwach); 3300-2600 (mehrere Banden, schwach); 2600-1700 (mehrere Banden, schwach); 1650-1600 (eine Bande, mittel); 1600-1550 (eine Bande, stark); 1550-1450 (mehrere Banden, mittel); 1400-1300 (zwei Banden, stark); 1300-1200 (mehrere Banden, mittel); 1200-1150 (eine Bande, stark); 1150-1000 (mehrere Banden, mittel); 1000-400 (mehrere Banden, schwach);
- DSC: keine Zersetzung bis 250°C (unter Luftatmosphäre); Zersetzungspeaks bei 262°C (schwach), 295°C (mittel), ab 315°C (stark);
- pH-Wert: 2,8
- Leitfähigkeit: 450 µS/cm
- Restfeuchte: 1,6 % (Karl-Fischer)
- Teilchengrößenverteilung: d₅₀ = 7,4 µm, d₉₅ = 17,2 µm (Coulter-Counter);

### Anwendungsbeispiel 1

1 Teil der Verbindung aus dem Herstellungsbeispiel wird mittels eines Kneters innerhalb von 30 Minuten in 99 Teile eines Tonerbindemittels (Styrol-Acrylat-Copolymer 60:40 ^{®}Almacryl B-1501) homogen eingearbeitet. Anschließend wird auf einer Labor-Universalmühle gemahlen und dann auf einem Zentrifugalsichter klassifiziert. Die gewünschte Teilchenfraktion (4 bis 25 *µ*m) wird mit einem Carrier aktiviert, der aus mit Styrol-Methacrylat-Copolymer (90:10) beschichteten Magnetit-Teilchen der Größe 50 bis 200 *µ*m besteht.

Die Messung erfolgt an einem üblichen q/m-Messstand. Durch Verwendung eines Siebes mit einer Maschenweite von 45 *µ*m wird sichergestellt, dass bei den Tonerausblasungen kein Carrier mitgerissen wird. Die Messungen erfolgen bei ca. 50 %iger relativer Luftfeuchte. In Abhängigkeit von der Aktivierdauer werden die in der nachstehenden Tabelle angegebenen q/m-Werte [*µ*C/g] gemessen:

| Aktivierdauer | Aufladung q/m [µC/g] |
|---|---|
| 5 Min. | +14 |
| 10 Min. | +15 |
| 30 Min. | +15 |
| 2 Std. | +16 |

### Anwendungsbeispiel 2:

Es wird wie in Anwendungsbeispiel 1 verfahren, wobei zusätzlich noch 5 Teile eines organischen Pigments (Ruß ^{®}Mogul L, Cabot) eingearbeitet werden.

| Bsp. Nr. | q/m [µC/g] | | | |
|---|---|---|---|---|
| | 5 Min. | 10 Min. | 30 Min. | 120 Min. |
| 2 | +10 | +12 | +13 | +14 |

## Patentansprüche

1. Verfahren zur Herstellung einer Verbindung der Formel (1), 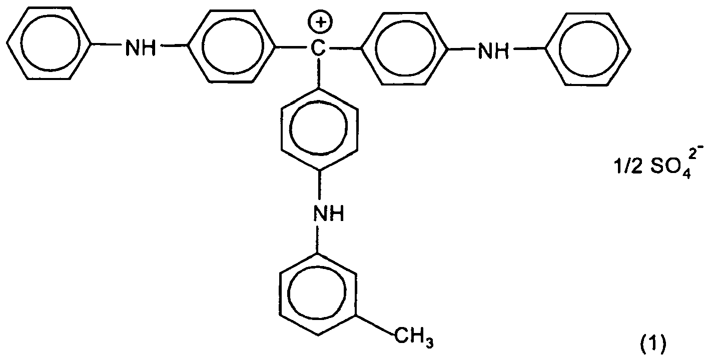 **gekennzeichnet durch** einem Gehalt an primären aromatischen Aminen von weniger als 2000 ppm, bestimmt **durch** Hochdruckflüssigkeitschromatographie durch Friedel-Crafts-Alkylierung von p-Chlorbenzotrichlorid mit Chlorbenzol, Substitution des aromatisch gebundenen Chlors **durch** Anilin und m-Toluidin, alkalische Hydrolyse zur Farbstoffbase und Ausfällen als Farbbasensulfat der Formel (1), **dadurch** gekennzeichnet, dass das Farbbasensulfat
a) in Wasser aufgenommen und einer ersten Wasserdampfdestillation unterzogen, anschließend filtriert und gegebenfalls bei 50 bis 180°C getrocknet wird,
b) der Presskuchen mit Wasser versetzt bzw. das gegebenenfalls getrocknete Farbbasensulfat mit Wasser angeteigt,
c) einer weiteren Wasserdampfdestillation und Filtration unterzogen
d) und einer Trocknung bei 50 bis 180°C unterworfen wird.

2. Verfahren nach Anspruch 1, **dadurch gekennzeichnet, dass** der Schritt b) und c), gegebenfalls einschliesslich d), ein- bis zehnmal, vorzugsweise zwei- bis viermal, wiederholt wird, wobei Schritt d) nach der letzten Wiederholung in jedem Fall durchgeführt wird.

3. Verfahren nach Anspruch 1 oder 2, **dadurch gekennzeichnet, dass** die Trocknung bei einer Temperatur zwischen 80 und 160°C durchgeführt wird.

4. Verfahren nach einem oder mehreren der Ansprüche 1 bis 3, **dadurch gekennzeichnet, dass** das Farbbasensulfat im Verhältnis 1:1 bis 1:1000 mit Wasser versetzt bzw. angeteigt wird.

5. Verfahren nach einem oder mehreren der Ansprüche 1 bis 4, **dadurch gekennzeichnet, dass** das Farbbasensulfat vor der ersten Wasserdampfdestillation und/oder vor einer oder mehreren weiteren Wasserdampfdestillationen einer Nassmahlung unterzogen wird.

## Claims

1. A process for preparing a compound of the formula (1) 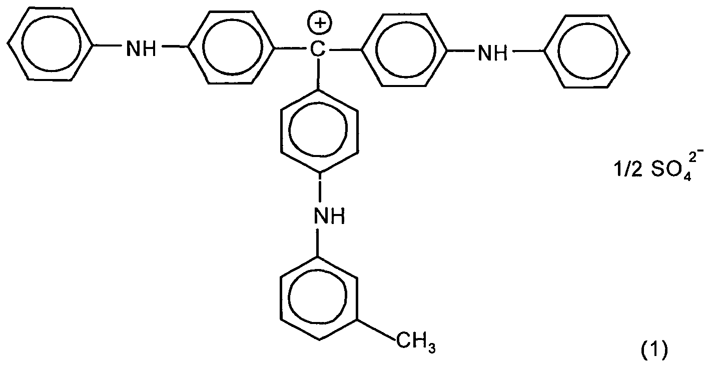 **characterized by** a primary aromatic amine content of less than 2000 ppm as determined by high performance liquid chromatography, by Friedel-Crafts alkylation of p-chlorobenzotrichloride with chlorobenzene, substitution of the aromatically bonded chlorine by aniline and m-toluidine, alkaline hydrolysis to give the dye base, and precipitation as the dyebase sulfate of the formula (1), which comprises
a) taking up the dyebase sulfate in water and subjecting it to a first steam distillation, then filtering it and drying, where appropriate, at from 50 to 180°C,
b) adding water to the presscake or pasting the dyebase sulfate, where it has been dried, with water,
c) subjecting it to a further steam distillation and filtration
d) and to drying at from 50 to 180°C.

2. The process as claimed in claim 1, wherein steps b) and c), including d) where appropriate, are repeated from one to ten times, preferably from two to four times, with step d) being carried out in every case after the final repetition.

3. The process as claimed in claim 1 or 2, wherein drying is conducted at a temperature of between 80 and 160°C.

4. The process as claimed in one or more of claims 1 to 3, wherein the dyebase sulfate is pasted or admixed with water in a ratio of from 1:1 to 1:1000.

5. The process as claimed in one or more of claims 1 to 4, wherein before the first steam distillation and/or before one or more further steam distillations the dyebase sulfate is subjected to wet grinding.

## Revendications

1. Procédé de fabrication d'un composé de formule (1) 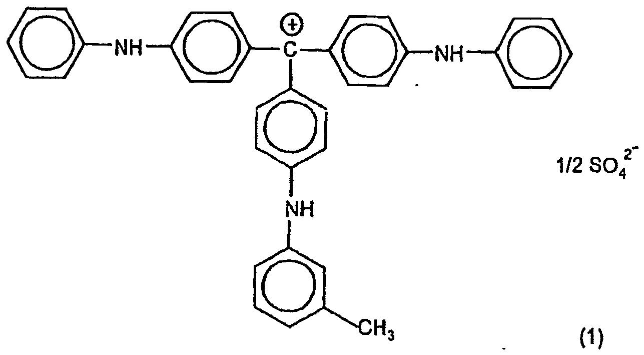 **caractérisé par** une teneur en amines aromatiques primaires inférieure à 2 000 ppm, déterminée par chromatographie liquide haute pression, par alkylation de Friedel-Crafts de trichlorure de p-chlorobenzène avec du chlorobenzène, substitution du chlore relié aromatiquement par de l'aniline et de la m-toluidine, hydrolyse alcaline pour obtenir la base de colorant et précipitation sous la forme du sulfate de base de colorant de formule (1), **caractérisé en ce que** le sulfate de base de colorant
a) est repris dans de l'eau et soumis à une première distillation à la vapeur d'eau, puis filtré et éventuellement séché à une température de 50 à 180 °C,
b) le gâteau de filtration est mélangé avec de l'eau ou le sulfate de base de colorant éventuellement séché est transformé en pâte avec de l'eau,
c) soumis à une distillation à la vapeur d'eau et une filtration supplémentaires,
d) et soumis à un séchage à une température de 50 à 180 °C.

2. Procédé selon la revendication 1, **caractérisé en ce que** l'étape b) et c), éventuellement y compris d), est répétée une à dix fois, de préférence deux à quatre fois, l'étape d) étant à chaque fois réalisée après la dernière répétition.

3. Procédé selon la revendication 1 ou 2, **caractérisé en ce que** le séchage est réalisé à une température comprise entre 80 et 160 °C.

4. Procédé selon une ou plusieurs des revendications 1 à 3, **caractérisé en ce que** le sulfate de base de colorant est mélangé ou transformé en pâte avec de l'eau en un rapport de 1:1 à 1:1 000.

5. Procédé selon une ou plusieurs des revendications 1 à 4, **caractérisé en ce que** le sulfate de base de colorant est soumis à un broyage humide avant la première distillation à la vapeur d'eau et/ou avant une ou plusieurs distillations à la vapeur d'eau supplémentaires.
